# EUROPEAN PATENT APPLICATION

(11) **EP 4 311 921 A1**
(43) Date of publication of application: **31.01.2024**
(21) Application number: 22306147.4
(22) Date of filing: 29.07.2022
(51) Int. Cl.: F02B 21/00, F01B 9/02, F01L 17/00, F02B 25/28, F02B 75/04, F02B 75/22, F02M 21/02, F02B 75/02

(54) **HYDROGEN INTERNAL COMBUSTION ENGINE COMPRISING A MOVABLE JACKET**

(71) Applicant: EHM, 29150 Châteaulin (FR)
(72) Inventor: ARENAL, Didier, 29000 QUIMPER (FR); MORIN, André, 29400 GUIMILIAU (FR); HAGO, Wilson, CAMARILLO, CA 93012 (US); LABAT, Gaël, 29217 Plougonvelin (FR)
(74) Representative: Germain Maureau

(57) **Abstract**

A hydrogen internal combustion engine (10) comprising a cylinder (12) having a chamber (12A) extending along an axis (Y1), a cylinder head (54), a movable jacket (60) configured to reciprocally travel in the chamber (12A), a piston (14) configured to reciprocally travel in the movable jacket (60), an intake port (32) arranged in a side wall of the cylinder (12), an exhaust port (34) arranged in a side wall of the cylinder (12), the movable jacket (60) having an intake through hole (60A) and an exhaust through hole (60B) respectively configured to allow fluid communication between the intake port (32) / exhaust port (34) and the chamber (12A) depending on the relative position of the movable jacket (60) relative to the cylinder (12), and a fuel injection port (38) arranged in a wall of the cylinder head (54).

## Description

### TECHNICAL FIELD

The present disclosure relates to a hydrogen internal combustion engine, in particular of the type having a piston, for example five-stroke engine, but not necessarily

### BACKGROUND

Hydrogen internal combustion engine may be considered as a relevant response to the global warming. However, the performance of traditional hydrogen internal combustion engine may be not fully satisfying. Therefore, a need exists for providing a hydrogen internal combustion engine having improved performance.

### SUMMARY

An embodiment relates to a hydrogen internal combustion engine comprising a cylinder having a chamber extending along an axis, a cylinder head, a movable jacket configured to reciprocally travel in the chamber, a piston configured to reciprocally travel in the movable jacket, an intake port configured to conduct fuel oxidizer within the chamber and arranged in a side wall of the cylinder, an exhaust port configured to discharge combusted gaz outside the chamber and arranged in a side wall of the cylinder, the movable jacket having an intake through hole configured to allow fluid communication between the intake port and the chamber depending on the relative position of the movable jacket relative to the cylinder, the movable jacket having an exhaust through hole configured to allow fluid communication between the exhaust port and the chamber depending on the relative position of the movable jacket relative to the cylinder, and a fuel injection port configured to inject hydrogen within the chamber and arranged in a wall of the cylinder head

The hydrogen internal combustion engine may be powered only by hydrogen, i.e. may use only hydrogen as fuel. Hydrogen may be provided in a gaseous form. In the following, and unless otherwise specified, "engine" should be understood as "hydrogen internal combustion engine".

The engine may have at least one cylinder, each cylinder having a chamber, and a single piston being provided within each chamber of each cylinder. The piston(s) may reciprocate in translation along the axis of the cylinder.

In the frame of the present disclosure, unless otherwise specified, the different ports open in the chamber of the cylinder. However, it is understood that when the ports are opened (i.e. not closed) they may open not only in the chamber, but also in the combustion chamber i.e. the volume defined by the piston, the cylinder head, the cylinder and any other potential element such as, for example, a movable jacked. Indeed, depending on the position of the piston, the ports may not always open within the combustion chamber. The combustion chamber may be defined as the volume wherein oxidizer and fuel are injected, compressed and combusted and from where combustion gaz are exhausted.

The fuel oxidizer may be gaseous and may be air only or a mixture of air and any gaseous additive such as dioxygen. The fuel oxidizer may also comprise liquid, for example liquid additive, for example water, in a sprayed form.

The intake port, the exhaust port and the fuel injection port may be distinct from each other. The intake through hole and the exhaust through hole may be distinct from each other. Each port/through holes may be single or may comprise several ports/through holes.

The jacket may strictly have a cylindrical shape, complementary to the shape of the cylinder, and provided with the intake through hole and the exhaust through hole. For example, the jacket may reciprocate in translation along the axis of the cylinder or in rotation around the axis of the cylinder or both in rotation around the axis of the cylinder and in translation along the axis of the cylinder.

The wall of the cylinder head may be distinct from the side wall of the cylinder.

The jacket may be configured to reciprocate between two positions, namely a first position and a second position. For example in the first position, the intake through hole and the intake port are shifted from each other and block any fluid communication between the intake port and the chamber, while the exhaust through hole and the exhaust port face each other and allow fluid communication between the exhaust port and the chamber. For example in the second position, the intake through hole and the intake port face each other and allow fluid communication between the intake port and the chamber, while the exhaust through hole and the exhaust port are shifted from each other and block any fluid communication between the exhaust port and the chamber. For example, the jacket may be configured to adopt an intermediate position between the first position and the second position, wherein both the intake through hole and the intake port on the one hand and the exhaust through hole and the exhaust port are shifted from each other and block any fluid communication between the intake port, the exhaust port and the chamber.

The jacket may be moved via for example via cam system linked directly or indirectly to the crankshaft, or any other means known by the skilled person such as an electric or hydraulic system, linked to or independent from the crankshaft. An electric control unit may control the movements of the jacket as function of the crankshaft position or movement or as a function of the combustion cycle.

The piston is received within the jacket, and may block any fluid communication between a port and the chamber when facing the through hole corresponding to said port while the through hole and the port face each other.

The fuel injection port being arranged on a wall of the cylinder head fuel injection may be carried out independently of the position of the jacket. The fuel injection port may be a fuel nozzle of a fuel injector, but not necessarily.

Such a configuration may help to carry out a fine control of the combustion cycle while requiring less energy than the engine of the prior art, and may have an improve efficiency. For example, the jacket may require very few energy to move for example by low friction between the jacket and the cylinder.

In some embodiments, the piston may comprise a projection extending along the axis toward a crankshaft, the piston being mechanically coupled to the crankshaft via a connecting rod, the projection being configured to block fluid communication between the exhaust through hole and an inner volume of the movable jacket depending on the relative position of the piston relative to the movable jacket.

When the projection face the exhaust through hole, fluid communication between the exhaust port and the chamber (or the inner volume of the movable jacket) may be blocked even if the exhaust port and the exhaust trough hole face each other. In other words, the projection may close the exhaust hole.

With such a configuration, the jacket may be configured to move only between the first position and the second position, without any specific intermediate position between the first position and the second position, and the piston may operate as a valve to close/open the exhaust port when the jacket is in the first position, depending on the position of the piston. This may help to save energy and to improve the engine efficiency.

In some embodiments, considered along the axis, the intake port may be closer to the cylinder head than the exhaust port.

In some embodiments, considered along the axis, the intake through hole may be closer to the cylinder head than the exhaust through hole.

In some embodiments, considered along the axis, the length between the intake port and the exhaust port may be smaller than the length between the intake through hole and the exhaust through hole.

All or part of the above arrangements may help to improve a fine control of the combustion cycle while saving energy. For example, all or part of the above arrangements may help to improve the exhaust and/or intake performance and prevent gaz leak or gaz back flow.

In some embodiments, the hydrogen internal combustion engine may comprise an active vacuum system configured to depressurize the chamber via a vacuum port, the vacuum port being arranged in a wall of the cylinder head.

The vacuum system is an active system. An active system is a system that need to be powered by a power source, e.g. electricity, to operate. In the following, and unless otherwise specified, "vacuum system" should be understood as "active vacuum system".

The vacuum port may be distinct from the exhaust port, from the intake port, from the fuel injection port and/or other ports, if any. When the chamber is depressurized, all or part of any gaz of the chamber may be withdrawn from the chamber via the vacuum port. The vacuum port being arranged on a wall of the cylinder head depressurization may be carried out independently of the position of the jacket. The vacuum system may be configured to depressurize the chamber during a depressurization stroke or only during the depressurization stroke.

The vacuum system may help to better withdraw residual combusted gaz or hot gaz, from the combustion chamber at a predetermined timing during the combustion cycle, for example after the combustion stroke, for example after the exhaust stroke. This may help to prevent warm-up of the cylinder and of the engine block comprising the cylinder by the residual combusted gaz or hot gaz. Providing a certain level of depression or of vacuum in the combustion chamber may also help to cool the cylinder and the engine bloc. This may help to increase the temperature difference of the gazes between admission and combustion, which may participate to increase the engine performance.

In some embodiments, the active vacuum system may comprise a vacuum producer and a valve configured to fluidly connect/disconnect the vacuum producer and the chamber.

The combination of the vacuum producer and valve may help to ensure an immediate and satisfactory level of vacuum, during the entire period of use of the engine, i.e. from starting up to stopping the engine, when depressurization of the chamber is required, which may participate to increase the engine performance.

In some embodiments, the hydrogen internal combustion engine may be configured so that a compression ratio during a compression stroke may be lower than the a depressurization ratio during a combustion stroke, for example the compression ratio may lie between 8 and 13, for example between 10.5 and 11.5, and the depressurization ratio may lie between 14 and 18.

The compression ratio CR may be the ratio of the volume V1 of the combustion chamber, i.e. the volume defined by the piston, the cylinder head, the cylinder and the jacked, at the beginning of the compression stroke to the volume V2 of the combustion chamber at the time of the ignition - spark ignition or compression ignition - (i.e. at the end of the compression stroke or at the beginning of the combustion stroke). In other words, CR = V1/V2. For example, at the beginning of the compression stroke, the pressure within the combustion chamber may be at the atmospheric pressure (e.g. about 0.1 Mpa).

The depressurization ratio DR may be the ratio of the volume V3 of the combustion chamber at the end of the combustion stroke (i.e. beginning of the exhaust stroke) to the volume V2 of the combustion chamber at the timing of the ignition. In other words, DR = V3/V2.

Such different ratios may help to improve engine performances.

In some embodiments, a length of a piston stroke during a compression stroke, called compression length, may be shorter than a length of a piston stroke during a combustion stroke, called combustion length.

In some embodiments, during a combustion cycle, the piston may be configured to move from a first top dead center to a first bottom dead center, then from the first bottom dead center to a second top dead center, then from the second top dead center to a second bottom dead center, and then from the second bottom dead center to the first top dead center, the first bottom dead center, the second bottom dead center, the second top dead center and the first top dead center being arranged in that order along the axis, the first top dead center being the dead center the closest to the cylinder head.

In other words, from the crankshaft toward the cylinder head, the dead centers may be arranged in the following order: first bottom dead center, second bottom dead center, second top dead center and first top dead center. All the dead centers may be different from each other.

In some embodiments, the length of the stroke of the piston during a combustion stroke may be at least equal (i.e. equal or greater) to the length between the first top dead center and the second bottom dead center and the length of the stroke of the piston during a compression stroke may be equal to the length between an intermediate position and the first top dead center, the intermediate position being disposed between the second bottom dead center and the second top dead center and distinct from the second bottom dead center and the second top dead center.

In some embodiments, the piston may be mechanically connected to a crankshaft via a connecting rod, the crankshaft being solid with a planetary gear of an epicyclic gear train, an output shaft of the epicyclic gear train forming the driving shaft of the hydrogen internal combustion engine.

All or part of the above may contribute to obtain a different compression and depressurization ratios in an energy-efficient way. For example, an expansion greater than a compression may help to obtain a lower pression at the end of the combustion stroke than at the beginning of the compression stroke and may help to improve the cooling effect of the combusted gaz.

In some embodiments, the hydrogen internal combustion engine may be a five-stroke engine, the five strokes being namely an intake stroke, a compression stroke, a combustion stroke, an exhaust stroke and a depressurization stroke per combustion cycle, an active vacuum system being configured to depressurize the chamber during the depressurization stroke

An intake stroke may be a stroke during which a fuel oxidizer, potential additive, and/or hydrogen is supplied to the chamber or during which the intake port and/or the fuel injection port is opened. A compression stroke may be a stroke during which a mixture of fuel oxidizer, potential additive and hydrogen is compressed by the piston, within the chamber. During the compression stroke, all the ports may be closed. A combustion stroke may be a stroke during which combustion occurs, e.g. due to spark ignition or due to compression ignition, and subsequently the ignited gaz expands and pushes the piston. During the combustion stroke, all the ports may be closed. An exhaust stroke may be a stroke during which combusted gaz are at least in part withdrawn via the exhaust port or during which the exhaust port is opened. A depressurization stroke may be a stroke during which the chamber is at least in part depressurized with the help of the active vacuum system, for example via a vacuum port, or during which a vacuum port is opened.

The vacuum system may be configured to depressurize the chamber during the depressurization stroke. Such a sequence may help to decrease the temperature within the chamber, and thus of the engine block, between the exhaust stroke and the intake stroke, and cooling the engine block. As a side effect, this may help to increase the temperature difference of the gazes between admission and combustion. It may also help to improve the injection during the intake stroke. The foregoing may participate to increase the engine performance

In some embodiments, the hydrogen internal combustion engine may comprise an even number of cylinders, for example five or a multiple of five cylinders, wherein each cylinder is provided with a single piston, each piston being mechanically coupled to a single and same crank pin of the crankshaft via respective connecting rods.

In other words, each piston may be provided with a single connecting rod, all the connecting rods of all the pistons being attached to a single and same crank pin of the crankshaft.

Engines having such a number of cylinders may be well adapted to a five-stroke engine.

In some embodiments, the hydrogen internal combustion engine may be a spark-ignition engine. Spark ignition may improve ignition stability.

All or part of the above may participate to increase the engine performance.

### BRIEF DESCRIPTION OF THE DRAWINGS

The disclosure and its advantages can be better understood by reading the detailed description of various embodiments given as non-limiting examples. The description refers to the accompanying sheets of figures, in which:
- Figure 1 shows a simplified cross section of an hydrogen internal combustion engine,
- Figure 2 shows a perspective view of the crankshaft and the epicyclic gear trains of the hydrogen internal combustion engine of figure 1,
- Figure 3 shows movement lines of the crankshaft of the hydrogen internal combustion engine of figure 1,
- Figure 4A to 4J shows a partial cross section viewed according to arrow IV of figure 1, at different positions of the piston and of the jacket, and
- Figure 5 shows a diagram of the cinematic of one piston of the engine of figure 1 during a combustion cycle.

### DETAILED DESCRIPTION

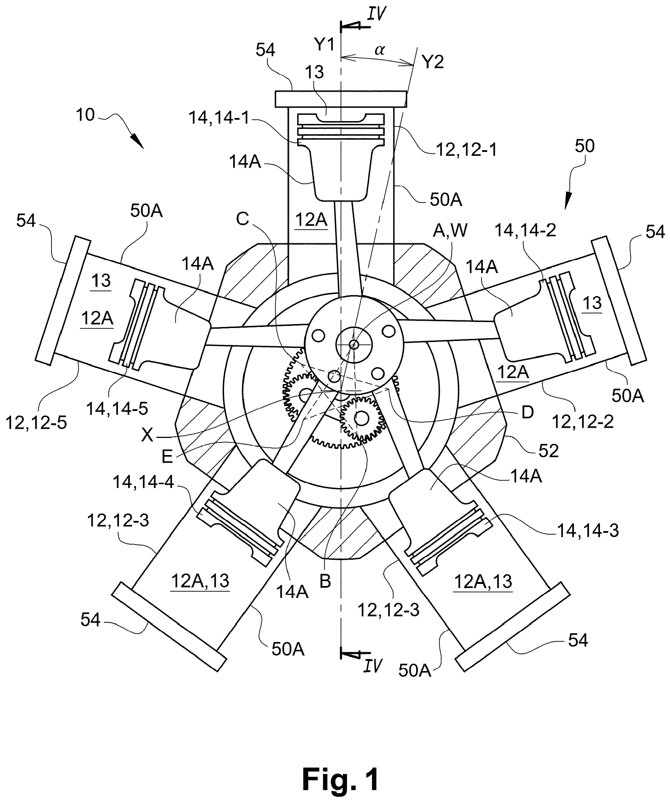

A hydrogen internal combustion engine 10 is described with reference the figures. For the ease of the reading, some elements are not show in figure 1, in particular the jacket and the different ports. The engine 10 may comprise a plurality of cylinders, for example an even number of cylinders, for example five cylinders 12.

The engine 10 may have a star configuration, the five cylinders 12 being arranged around a central axis X (or may extend radially from a central axis X), and may be regularly angularly distributed around the axis X. The cylinders 12 may be angularly spaced of 72° (or π/5) from the adjacent cylinders 12, around the axis X. In a variant, other arrangements of the cylinders may be provided, for example in-line arrangement, V-type arrangement, or any other suitable arrangements.

The engine block 50, may comprise five sub-engine blocks 50A, one sub-engine block 50A per cylinder 12. Each sub-engine block 50A may be mounted on a common central crankcase 52, and may each receive a cylinder head 54. However, any shape of engine block and of cylinder head may be provided.

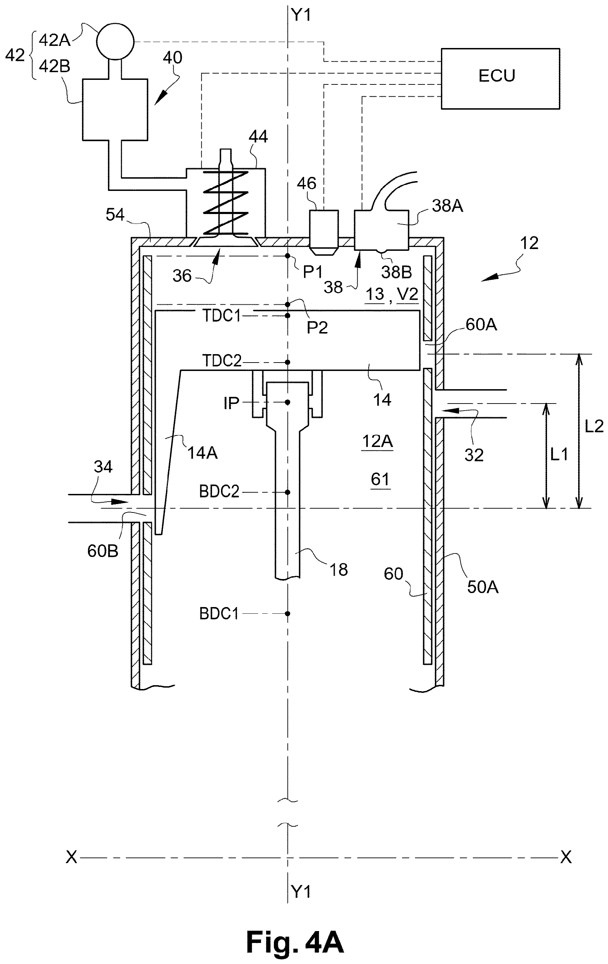

Each cylinder 12 may comprise a chamber 12A extending along an axis Y1, each chamber 12A receiving a piston 14 configured to reciprocally travel in the chamber 12A. In the present example, the cylinder 12 may comprise a movable jacket 60 configured to reciprocally travel in the chamber 12A and the piston 14 may be configured to reciprocally travel in the movable jacket 60 (see figure 4A). In the present example, the movable jacket 60 may reciprocate in translation along the axis Y1. The piston 14 may reciprocate in translation along the axis Y1.

The variable volume defined or delimited by the piston 14, the cylinder head 54, the cylinder 12 and, in the present example, the movable jacked 60 may forms a combustion chamber 13. The combustion chamber 13 may be included within the chamber 12A.

Each piston 14 is mechanically connected to a crankshaft 16 via a connecting rod 18. All the connecting rods 18 may be connected to a single and same crank pin 17 of the crankshaft 16. Broadly, the engine 10 may comprise a plurality of cylinders 12, wherein each cylinder 12 is provided with a single piston 14, each piston 14 being mechanically coupled to a single and same crank pin 17 of the crankshaft 16 via respective connecting rods 16.

The crankshaft 16 may be solid with a planetary gear 20A of an epicyclic gear train 80A, an output shaft 28A1 of the epicyclic gear train 80A forming the driving shaft of the engine 10. In the present example, the two opposite axial end shafts 16A, 16B of the crankshaft 16 are respectively provided with a pinion 20A, 20B, which may respectively form a planetary gear of epicyclic gear trains 80A, 80B. Each epicyclic gear train 80A, 80B may respectively comprise a fixed ring gear 30A, 30B, three planetary gears 20A, 22A, 24A; 20B, 22B, 24B and a carrier 28A, 28B to which the three planetary gears 20A, 22A, 24A; 20B, 22B, 24B are rotatably mounted, respectively. Each carrier 28A, 28B may be configured to rotate around the axis X, the carrier 28A being provided with a central shaft 28A1 extending along the axis X and that may form an output shaft of the engine 10. In a variant not shown, the epicyclic gear train(s) may comprise a sungear. The (first) epicyclic gear train 80A is configured to output engine drive force while the (second) epicyclic gear train 80B may be configured to guide the movements of the crankshaft 16, together with the epicyclic gear train 80A.

The pinions 20A, 20B (or the crankshaft 16) may be configured to rotate five times while the carrier rotates twice, for example due to the combination of the movements of the crankshaft 16 and of the epicyclic gear trains 80A, 80B.

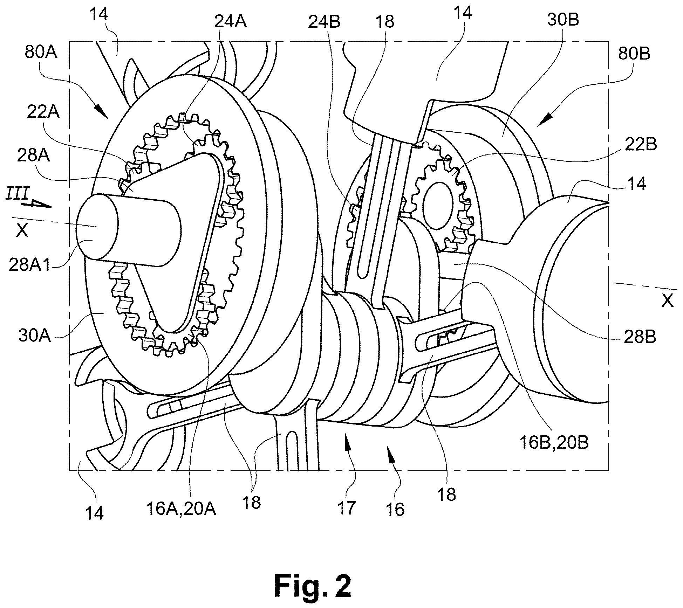

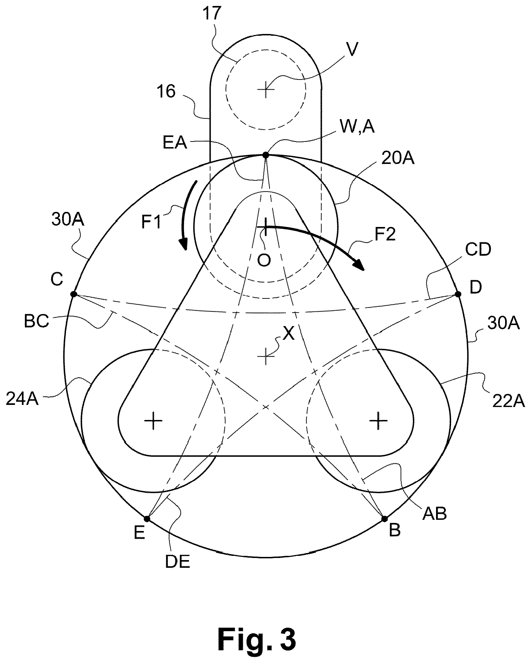

Figure 3 is a magnified and simplified view of the epicyclic gear train 80A, as seen from arrow III of figure 2. The following description also applies to the epicyclic gear train 80B, which is similar to the epicyclic gear train 80A. Figure 3 shows the movements of the geometric point W of the pinions 20A, which is the geometrical point of the pinions 20A that is the closest to the geometric center V of the crank pin 17 (around which the connecting rods 16 rotate), relative to the axis X, around which the carrier 28A rotates. Points W and V may coincide, but not necessarily. During a full combustion cycle, point W successively moves from point A to points B, C, D, E and then again to point A. All these points A, B, C, D and E may correspond to successive positions of the point W on the ring gear 30A. The pinion 20A, or the crankshaft 16, may rotate once (i.e. may rotate of 360° around the axis O of the pinion 20A or of the crankshaft 16) from one point (A, B, C, D or E) to the following one (B, C, D, E or A, respectively). The carrier 28A may rotate twice (i.e. may rotate of 720° around the axis X) during a full combustion cycle, when point W moves from point A to point A. The rotation of the pinion 20A, or the crankshaft 16, is shown by arrow F1 while the rotation of the carriers 28A is shown by arrow F2. For the ease of the reading, the teeth of the pinions 20A, 22A, 24A and of the ring gear 30A, are not shown in figure 3.

The five points A, B, C, D and E may be respectively disposed at the peaks of a five branches star. As shown in figure 1, the points A, B, C, D and E may be shifted of an angle α from the axis Y1 of the angularly closest cylinder 12. In other words, the branches Y2 of the five branches star formed by the five points A, B, C, D and E may be shifted of an angle α from the axis Y1 of the respective angularly closest cylinders 12. For example, α may lie between 0° and 20°, for example α = 12°. For example, in figure 1, point A may be associated with the angularly closest cylinder 12-1, point B may be associated with the angularly closest cylinder 12-3, point C may be associated with the angularly closest cylinder 12-5, point D may be associated with the angularly closest cylinder 12-2 and point E may be associated with the angularly closest cylinder 12-4. Each point A, B, C, D and E may respectively correspond to a first top dead center of the piston 14-1, 14-3, 14-5, 14-2, and 14-4 reciprocating in the cylinder 12-1, 12-3, 12-5, 12-2 and 12-4 respectively. For example, figure 1 shows a configuration wherein point W coincide with point A, the piston 14-1 of the cylinder 12-1 may be at its first top dead center. The position of each piston 14 in each cylinder 12 in figure 1 may correspond to the successive positions of a single piston 14 within a single cylinder 12 during a full combustion cycle, at successive points A, B, C, D and E. Only the movement of the first piston 14-1 of cylinder 12-1 may be thus described with reference to figure 3.

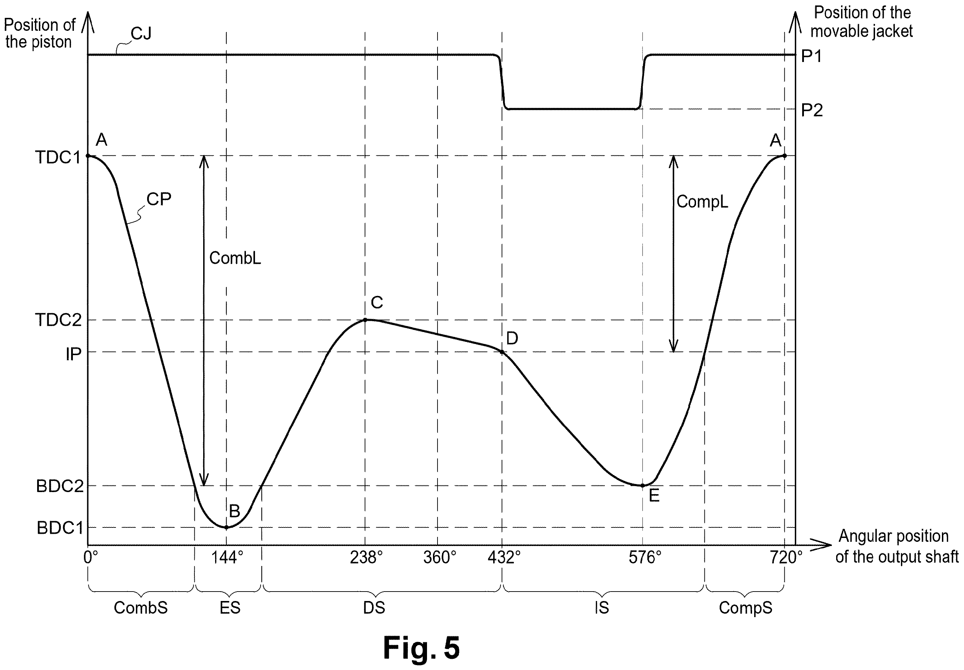

In the present example, during a combustion cycle, the piston 14 may be configured to move from a first top dead center TDC1 (see figure 4A and 5) to a first bottom dead center BDC1, then from the first bottom dead center BDC1 to a second top dead center TDC2, then from the second top dead center TDC2 to a second bottom dead center BDC2, and then from the second bottom dead center BDC2 to the first top dead center TDC1, the first bottom dead center BDC1, the second bottom dead center BDC2, the second top dead center TDC2 and the first top dead center TDC1 being arranged in that order along the axis Y1 of the cylinder, the first top dead center TDC1 being the dead center the closest to the cylinder head 54.

The movement of the first piston 14-1 of cylinder 12-1 as well as the movement of the geometric point W of the pinion 20A of the present example is described with more details with reference to figure 3. When point W coincides with point A, piston 14-1 is at the first top dead center (TDC1 in figure 4A). When moving from point A, pinion 20A, or the crankshaft 16, rotates along arrow F1 (in figure 3 in the counterclockwise direction), while the carriers 28A, rotates along arrow F2, (in figure 3 in the clockwise direction) so that point W of the pinion 20A moves to point B, following the dashed line AB, from point A to point B.

Point B corresponds to the first bottom dead center (BDC1 in figure 4A) of the piston 14-1. In figure 1, piston 14-3 is in the first bottom dead center. With similar rotations as for the movement from point A to point B, point W moves from point B to point C following the dashed line BC.

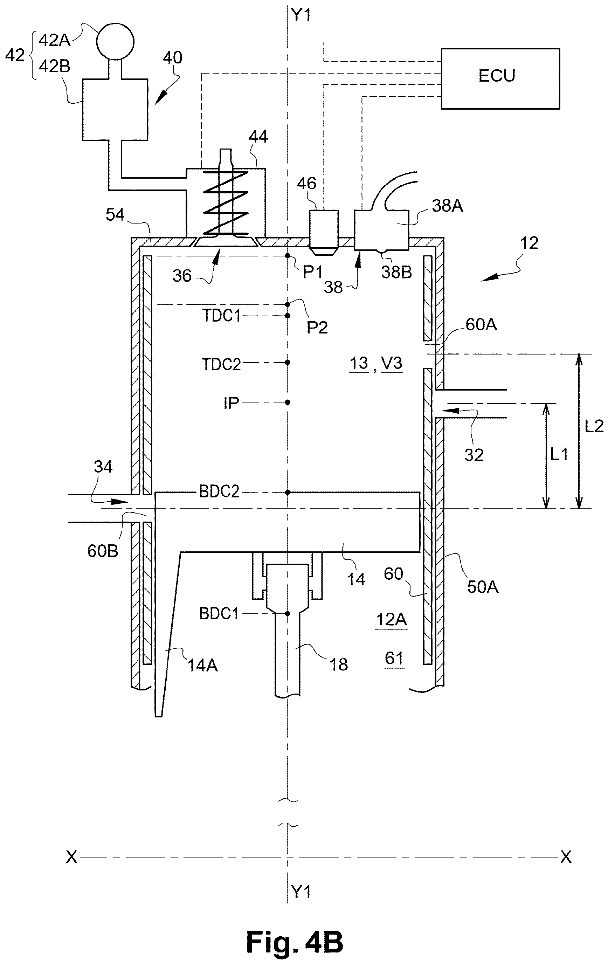

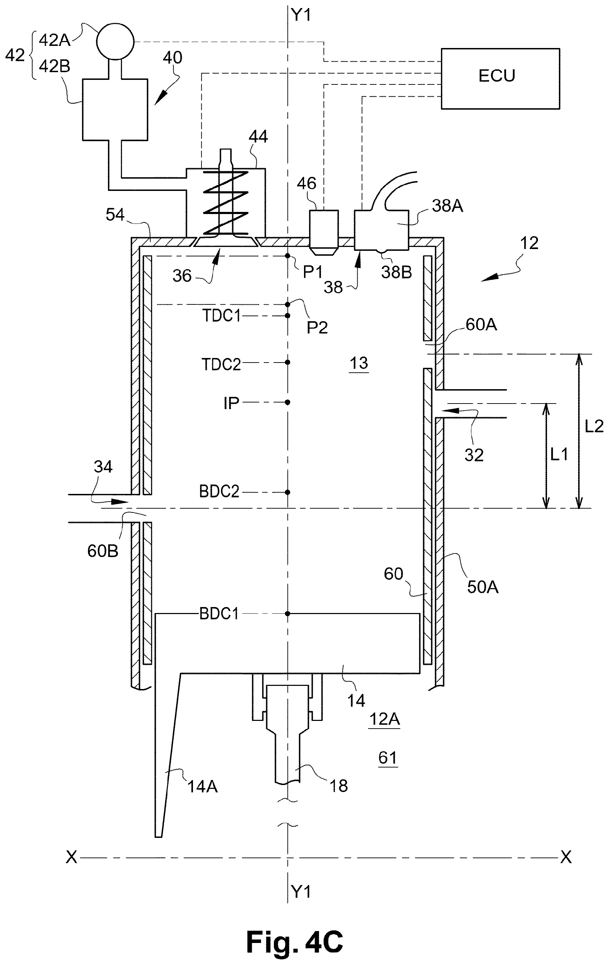

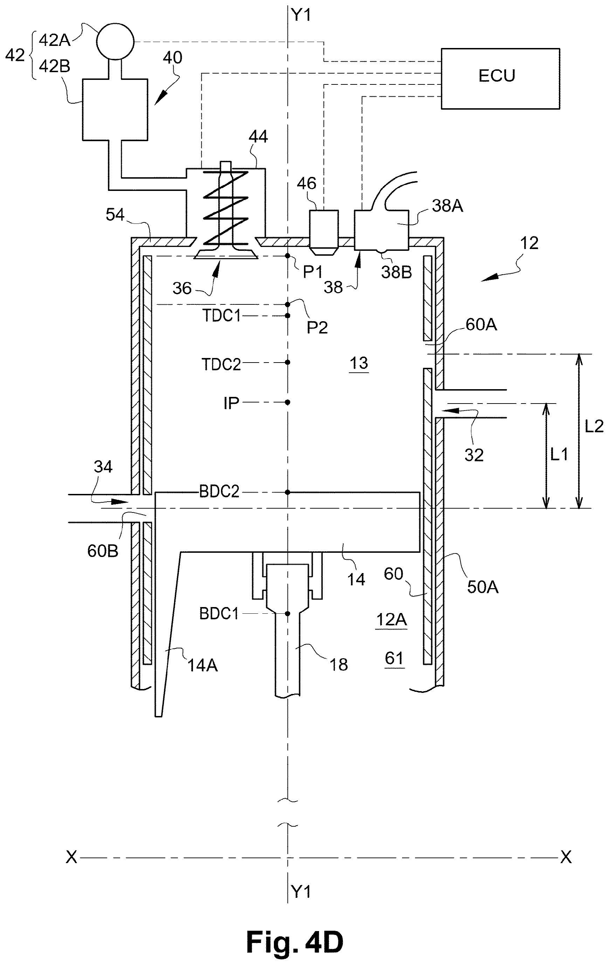

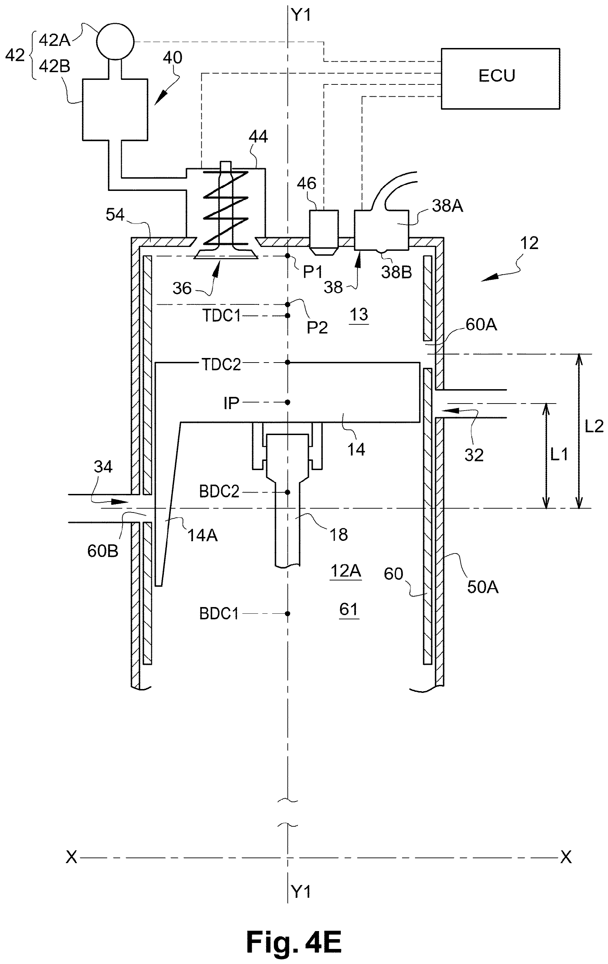

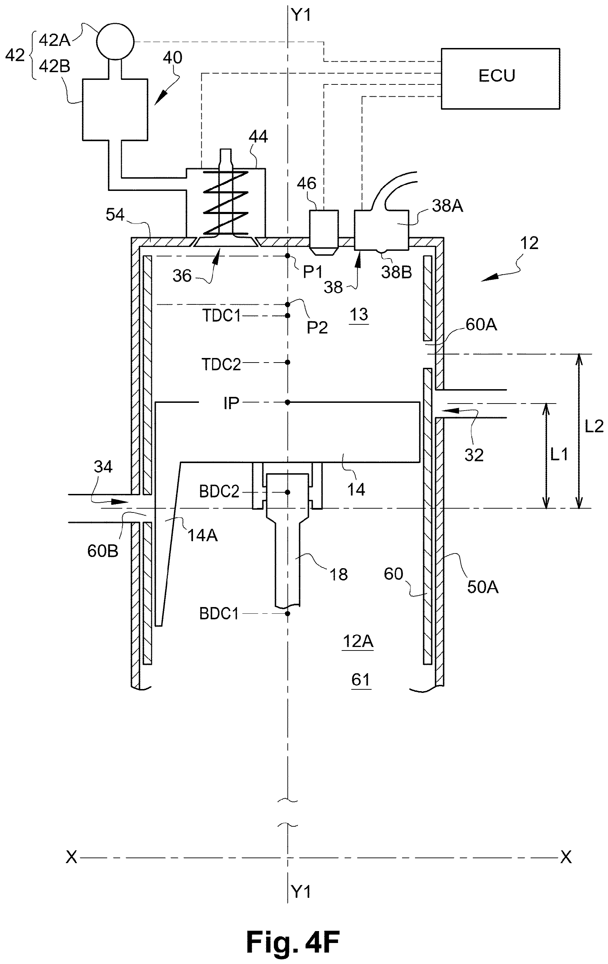

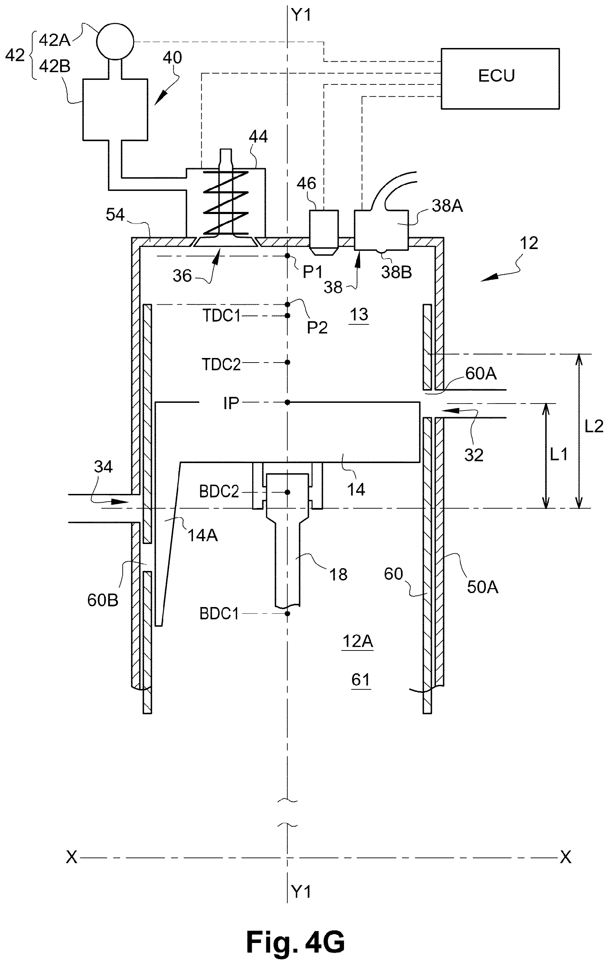

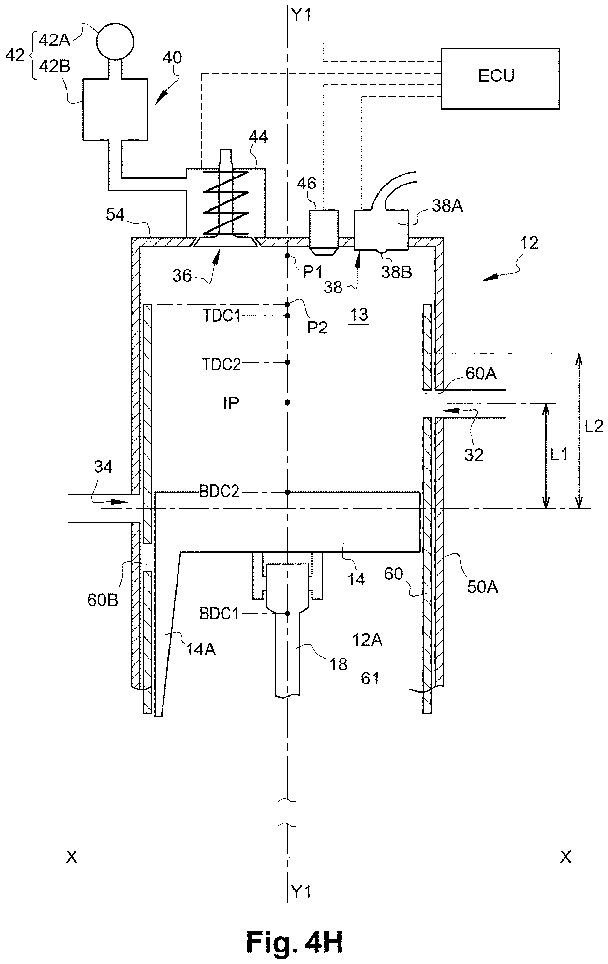

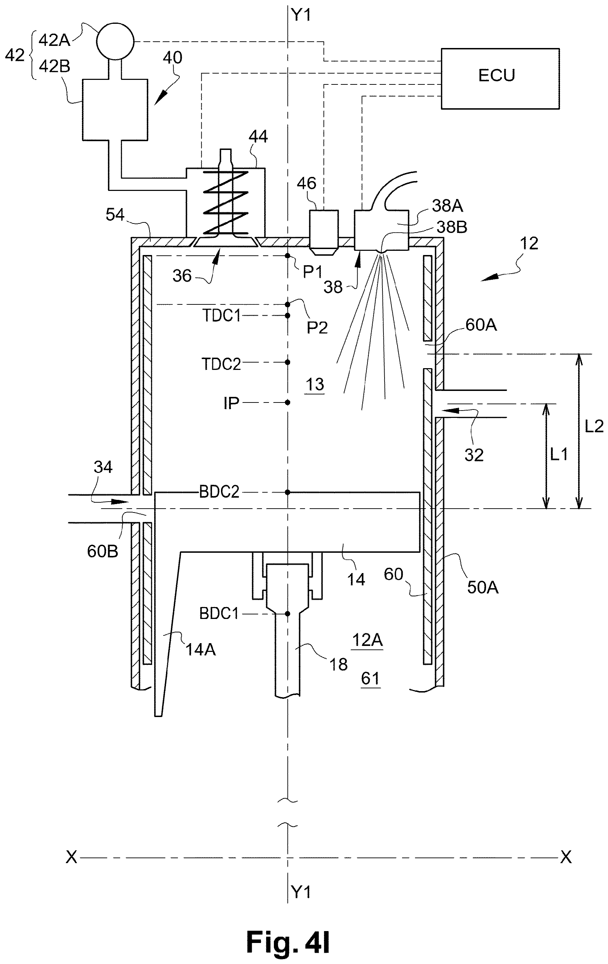

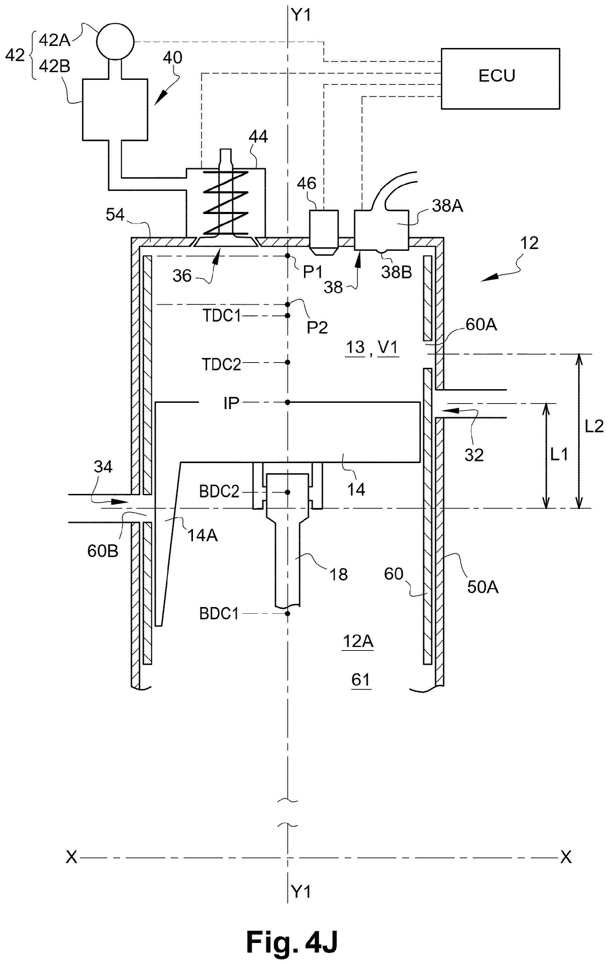

Point C corresponds to the second top dead center (TDC2 in figure 4) of the piston 14-1. In figure 1, piston 14-2 is in the second top dead center. With similar rotations as for the movement from point A to point B, point W moves from point C to point D following the dashed line CD.

Point D corresponds to an intermediate position (IP in figure 4A) between the second top dead center and a second bottom dead center (described hereafter) of the piston 14-1. In figure 1, piston 14-5 is in the intermediate position. With similar rotations as for the movement from point A to point B, point W moves from point D to point E following the dashed line DE.

Point E corresponds to the second bottom dead center (BDC2 in figure 4A) of the piston 14-1. In figure 1, piston 14-3 is in the second bottom dead center. With similar rotations as for the movement from point A to point B, point W moves from point E to point A following the dashed line EA.

The first stroke of the pistons 14 between the first top dead center TDC1 and the first bottom dead center BDC1 may be greater than the second stroke of the piston between the second top dead center TDC2 and the second bottom dead center BDC2. Along the axis Y1 of a cylinder 12, the distance between the axis X and the second bottom dead center BDC2 may be greater than the distance between the axis X and the first bottom dead center BDC1. Along the axis Y1 of a cylinder 12, the distance between the axis X and the second top dead center TDC2 may be greater than the distance between the axis X and the second bottom dead center BDC2. Along the axis Y1 of a cylinder 12, the distance between the axis X and the first top dead center TDC1 may be greater than the distance between the axis X and the second top dead center TDC2. As show in figure 4A, along the axis Y1 of the cylinder 12, from the axis X toward the cylinder head 54, the dead centers may be arranged in the following order: first bottom dead center BDC1, second bottom dead center BCD2, intermediate position IP, second top dead center TDC2 and first top dead center TDC1. For example, to consider the position of the piston along the axis Y1, the reference point of the piston 14 may be the geometrical center of the top surface of the piston, as shown for the first top dead center in figure 4A.

In the present example, considering along the axis Y1 of the cylinder 12 the side of the cylinder head as the top side, and the side of the central axis X or of the crankshaft 16 as the bottom side, in the intermediate position IP, the top of the piston 14 may be just above the intake port 32 in order to allow fluid communication between the intake port 32 and the chamber 12A (or the combustion chamber 13) -provided that the jacket 60 is in the second position see hereafter- when the piston 14 moves between the intermediate position IP and the first bottom dead center BDC1 and to block fluid communication between the exhaust port 34 and the chamber 12A otherwise. In the second bottom dead center BDC2 the top of the piston 14 may be just above the exhaust port 34, in order to allow fluid communication between the exhaust port 34 and the chamber 12A (or the combustion chamber 13) -provided that the jacket 60 is in the first position (see hereafter) when the piston 14 moves between the second bottom dead center BDC2 and the first bottom dead center BDC1 and to block fluid communication between the exhaust port 34 and the chamber 12A otherwise. The first top dead center BDC1 may be at any position below the lowest part of the exhaust port 34, the upper side being defined by the cylinder head 54 and the lower side being defined by the crankshaft 16.

The cylinders 12 are now described with more details with reference to figure 4A. In the present example, all the cylinders 12 may be identical, and the description of a single cylinder 12 may applies to all the cylinders 12. The cylinder 12 may have an intake port 32 configured to conduct intake gaz, for example fuel oxidizer, within the chamber 12A, for example within the combustion chamber 13, and an exhaust port 34 configured to discharge combusted gaz outside the chamber 12A, for example outside the combustion chamber 13. The intake port 32 may be arranged on a side wall of the cylinder 12. The exhaust port 34 may be arranged on a side wall of the cylinder 12. Considered along the axis Y1 of the cylinder 12, the intake port 32 may be closer to the cylinder head 54 than the exhaust port 34.

The movable jacket 60 may have an intake through hole 60A configured to allow fluid communication between the intake port 32 and the chamber 12A (or the combustion chamber 13) depending on the relative position of the movable jacket 60 relative to the cylinder 12. The movable jacket 60 may have an exhaust through hole 60B configured to allow fluid communication between the exhaust port 34 and the chamber 12A (or the combustion chamber 13) depending on the relative position of the movable jacket 60 relative to the cylinder 12. Considered along the axis Y1 of the cylinder 12 the intake through hole 60A may be closer to the cylinder head 54 than the exhaust through hole 60B. Considered along the axis Y1 of the cylinder 12, the length L1 between the intake port 32 and the exhaust port 34 is smaller than the length L2 between the intake through hole 60A and the exhaust through hole 60B. The reference points to measure these lengths may be the geometrical center of the ports / through holes. The intake through hole 60A and the exhaust through hole 60B may have the same shape and the same size as the intake port 32 and the exhaust port 34, respectively.

The piston 14 may comprise a projection 14A extending along the axis Y1 of the cylinder 12 toward the crankshaft 16 (or the central axis X), the projection 14A being configured to block fluid communication between the exhaust through hole 60B and an inner volume 61 of the movable jacket 60 depending on the relative position of the piston 14 relative to the movable jacket 60. As shown in figures 1 and 4A, the projection 14A may have a shape of a portion of cylinder, on a limited angular extent.

The movable jacket 60 may be configured to reciprocate between two positions, namely a first position P1 and a second position P2. For example in the first position P1, the intake through hole 60A and the intake port 32 are shifted from each other and block fluid communication between the intake port and the chamber 12A, while the exhaust through hole 60B and the exhaust port 34 face each other and allow fluid communication between the exhaust port 34 and the chamber 12A. For example in the second position P2, the intake through hole 60A and the intake port 32 face each other and allow fluid communication between the intake port 32 and the chamber 12A, while the exhaust through hole 60B and the exhaust port 34 are shifted from each other and block fluid communication between the exhaust port 34 and the chamber 12A. As shown in figure 4A; the top of the movable jacket 60, i.e. the point that is the closest to the cylinder head 54 may be considered as the reference point to determine the position of the movable jacket 60. In figure 4A, the jacket 60 is in the first position. However, in figure 4A the projection 14A of the piston 14 blocks fluid communication between the exhaust through hole 34 and the chamber 12A (or the inner volume 61 of the movable jacket 60).

The engine 10 may comprise a fuel port 38 configured to inject hydrogen within the chamber 12A, the fuel port 38 being distinct from the intake port 32. The fuel port 38 may be distinct from the exhaust port 34. The fuel port 38 may be distinct from the vacuum port 36. The fuel port 38 may be an injection nozzle 38B of a fuel injector 38A. The injection nozzle 38B may open in the chamber 12A. The fuel port 38 may be arranged in a wall of the cylinder head 54. The wall of the cylinder head 54 may be distinct from the side wall of the cylinder 12.

The engine 10 may comprise an active vacuum system 40 configured to depressurize the chamber 12A via a vacuum port 36, the vacuum port 36 being distinct from the exhaust port 34. The vacuum port 36 may be different from the intake port 32. The vacuum port 36 may be different from the fuel port 38. The vacuum port 36 may be arranged in a wall of the cylinder head 54. The active vacuum system 40 may be configured to depressurize the chamber 12A during a depressurization stroke.

The vacuum system 40 may comprise a vacuum producer 42 and a valve 44 configured to fluidly connect/disconnect the vacuum producer 42 and the chamber 12A (or the combustion chamber 13). The vacuum producer 44 may comprise a vacuum pump 42A and a vacuum accumulator 42B, the vacuum accumulator 42B being fluidly disposed between the vacuum pump 42A and the valve 44. In a variant, the vacuum producer 42 may be common to all the cylinders 12, the vacuum accumulator 42B being fluidly disposed between the vacuum pump 42A on the one hand, and all the valves 44 on the other hand. In another variant, each cylinder 12 may be provided with its own vacuum producer 42. The vacuum system 40 may be configured to provide a depressurization between 0.01 MPa and 0.09 MPa (i.e. greater or equal to 0.01 MPa and lower or equal to 0.09 MPa), the depressurization being measured at the interface between the chamber 12A and the vacuum port 36. The vacuum system 40 may be configured so that the pressure inside the vacuum accumulator 42B is strictly less than 0.1 MPa.

The engine 10 may be a spark-ignition engine. For example, the cylinder 12 may comprise a spark plug 46.

An electronic control unit ECU may control the vacuum system 40 (for example the valve 44 and/or the vacuum pump 42A) and/or the fuel injector 38A and/or the spark plug 46 and/or the movement of movable jacket 60.

A full combustion cycle as well as the movements of the piston 14 and of the jacket 60 during the combustion cycle are described with reference to figure 5.

The engine 10 may be a five-stroke engine, the five strokes being namely an (single) intake stroke IS, a (single) compression stroke CompS, a (single) combustion stroke CombS, an (single) exhaust stroke ES and a (single) depressurization stroke DS per combustion cycle. As seen in figure 5, a stroke of the combustion cycle does not necessarily correspond to a stroke of the piston 14.

Figure 5, successively represents, from the left to the right, the combustion stroke CombS, the exhaust stroke ES the depressurization stroke DS, the intake stroke IS and the compression stroke CompS. Curve CP represents the position of the piston 14 along the axis Y1 of the cylinder 12 as a function of the angular position of the output shaft 28A1 (or of the carrier 28). A full combustion cycle may last two full rotations (i.e. 720° or 4π) of output shaft 28A1. Points A, B, C, D and E are shown on curve CP to show the movement of point W, shown in figure 3, associated with the stroke of the piston 14 along the axis Y1 of the cylinder 12. Each stroke of the piston 14 between two of the successive points A, B, C, D and E may last a fifth of two full rotations (i.e. 144° or 4π/5) of the output shaft 28A1. Curve CJ represents the position of the movable jacket 60 along the axis Y1 of the cylinder 12, between the first position P1 and the second position P2, as a function of the angular position of the output shaft 28A1.

The combustion stroke CombS may start from the first top dead center TDC1 (configuration shown in figure 4A, point A shown in figure 3), which is shown at the left of figure 5, when ignition occurs in the combustion chamber 13. All the ports may be closed. The cylinder 12 moves toward the first bottom dead center BDC1 up to the second bottom dead center BDC2. During this movement, the jacket 60 may remain in the first position P1 and the piston 14 together with its projection 14A may close the exhaust port 34 as well as the exhaust trough hole 60B, which face each other. This configuration is shown in figure 4B. The combustion stroke CombS may end. The length CombL of the piston stroke during a combustion stroke is called combustion length. The combustion length CombL is at least equal to the length along the axis Y1 between the first top dead center TDC1 and the second bottom dead center BDC2. In the present example, the combustion length CombL may be equal to the length along the axis Y1 between the first top dead center TDC1 and the second bottom dead center BDC2. During the combustion stroke CombS, the volume of the combustion chamber 13 may increase from V2 to V3 and the depressurization ratio DR = V3/V2 may lie between 14 and 18. In the present example, DR may equal 16.

Then, the exhaust stroke ES may start. The piston 14 may continue its stroke while the jacket 60 remain at the first position P1. The exhaust port 34 and the exhaust trough hole 60B facing each other, the piston 14 may open the exhaust port 34 so that the combusted gaz may escape from the combustion chamber 13. The piston 14 may complete its stroke and move up to the first bottom dead center BDC1 (configuration shown in figure 4C, may correspond to point B in figure 3). Then, the piston 14 may move from the first bottom dead center BDC1 toward the second top dead center TDC2, up to the second bottom dead center BDC2, where the piston 14 may close the exhaust port 34 (same configuration as shown on figure 4B). The exhaust stroke ES may end. The phase during which the exhaust port 32 is open may form the exhaust stroke ES. All the other ports may remain closed.

Then, the depressurization stroke DS may start. The jacket 60 may remain at the first position P1 and the vacuum system 40 may start to depressurize the combustion chamber 13, for example by opening the valve 36. All the other ports may be closed. This configuration is shown in figure 4D. The piston 14 may continue its stroke up to the second top dead center TDC2, as shown in figure 4E, which may correspond to point C in figure 3. The stroke of the piston 14 from the first bottom dead center BDC1 up to the second top dead center TDC2 is ended and the next stroke of the piston 14 may start. The piston 14 may then move from the second top dead center TDC2 toward the second bottom dead center BDC2, up to the intermediate position IP. When the piston 14 reach the intermediate position IP, the valve 36 may close. This configuration is shown in figure 4F, and may correspond to point D in figure 3. The depressurization stroke DS may end. At the end of the depressurization stroke DS, the pressure inside the combustion chamber 13 may be less than 0.1 MPa (i.e. less than the atmospheric pressure), and a certain level of vacuum may have been created inside the combustion chamber 13. For example, the movement of the piston 14 from the second top dead center TDC2 up to the intermediate position IP, which may increase the volume of the combustion chamber 13 while the vacuum system 40 may provide a depression, may help to provide vacuum inside the combustion chamber 13. For example, the depressurization stroke DS may comprise two phases, a first phase during which the combustion chamber 13 is depressurized but wherein the pressure remain greater than or equal to the atmospheric pressure, and a subsequent second phase during which the pressure decrease below the atmospheric pressure and vacuum is created. For example, the first phase may take place during the movement of the piston 14 from the second bottom dead center BDC2 up to the second top dead center TDC2, and the second phase may take place during the movement of the piston 14 from the second top dead center TDC2 up to the intermediate position IP.

Then, the intake stroke IS may start. The jacket 60 may move from the first position P1 to the second position P2 in order to open the intake port 32 within the combustion chamber 13. This configuration is shown in figure 4G. Air or fuel oxidizer may then be provided to the combustion chamber 13. During this phase, the vacuum in the combustion chamber 13 provided during the depressurization stroke DS may help the intake of fuel oxidizer. The piston 14 may continue its stroke up to the second bottom dead center BDC2, as shown in figure 4H, which may correspond to point E in figure 3. This movement may also help the intake of fuel oxidizer. The stroke of the piston 14 from the second top dead center TDC2 to the second bottom dead center BDC2 via the intermediate position IP is ended. The jacket 60 may then move from the second position P2 to the first positon P1 to stop fuel oxidizer intake and fuel injection may start, for example via the injection 38A. This configuration is shown in figure 41. The next stroke of the piston 14 may start. The piston 14 may then move from the second bottom dead center BDC2 toward the first top dead center TDC1 up to the intermediate position IP. When the piston 14 reaches the intermediate position IP, fuel injection may stop. This configuration is shown in figure 4J. The intake stroke IS may end. In the present example, the intake stroke may comprise two phases, a first phase during which only fuel oxidizer is provided within the combustion chamber 13 and a subsequent second intake phase during which only fuel is provided within the combustion chamber 13. However, in a variant, fuel oxidizer and fuel may be provided simultaneously, or in different sequence(s) (e.g. order modified, more sequences, etc.). During the intake stroke IS, all the other ports may remain closed.

Then, the compression stroke CompS may start. The jacket 60 may remain at the first position P1, and all the ports may remain closed. The piston 14 may continue its stroke up to the first top dead center TDC1. The stroke of the piston 14 from the second bottom dead center BDC2 up to the first top dead center TDC1 via the intermediate position IP is ended. The piston 14 has now the configuration shown in figure 4A, which may correspond to point A in figure 3. The compression stroke CompS may end when ignition of the compressed mixture in the combustion chamber 13 occurs, in the present example due to spark-ignition. A new combustion stroke CombS of a next combustion cycle may subsequently start. The length CompL of a piston stroke during a compression stroke is called compression length. The compression length CompL may be equal to the length between the intermediate position IP and the first top dead center TDC1, the intermediate position IP being disposed between the second bottom dead center BDC2 and the second top dead center TDC1 and distinct from the second bottom dead center BDC2 and the first top dead center TDC1. The compression length CompL may be shorter than the combustion length CombL. During the compression stroke CompS, the volume of the combustion chamber 13 may decrease from V1 to V2 and the compression ratio CR = V1/V2 may lie between 8 and 13, for example between 10.5 and 11.5. In the present example, CR may equal 11.

It is understood that the movement of the piston 14 during the combustion cycle is continuous, and that the different sequence with the movements of the jacket 60 and/or the opening/closing of the different ports may be simultaneous.

Although the present disclosure is described with reference to specific examples, it is to be understood that these examples are merely illustrative of the principles and applications of the present disclosure. In particular, individual characteristics of the various embodiments shown and/or mentioned may be combined in additional embodiments. Consequently, the description and the drawings should be considered in a sense that is illustrative rather than restrictive.

Additionally, all of the disclosed features of an apparatus may be transposed, alone or in combination, to a method and vice versa.

It is intended that the specification and the examples be considered as exemplary only, with a true scope of the invention being indicated by the following claims.

## Claims

1. A hydrogen internal combustion engine (10) comprising a cylinder (12) having a chamber (12A) extending along an axis (Y1), a cylinder head (54), a movable jacket (60) configured to reciprocally travel in the chamber (12A), a piston (14) configured to reciprocally travel in the movable jacket (60), an intake port (32) configured to conduct fuel oxidizer within the chamber (12A) and arranged in a side wall of the cylinder (12), an exhaust port (34) configured to discharge combusted gaz outside the chamber (12A) and arranged in a side wall of the cylinder (12), the movable jacket (60) having an intake through hole (60A) configured to allow fluid communication between the intake port (32) and the chamber (12A) depending on the relative position of the movable jacket (60) relative to the cylinder (12), the movable jacket (60) having an exhaust through hole (60B) configured to allow fluid communication between the exhaust port (34) and the chamber (12A) depending on the relative position of the movable jacket (60) relative to the cylinder (12), and a fuel injection port (38) configured to inject hydrogen within the chamber (12A) and arranged in a wall of the cylinder head (54).

2. The hydrogen internal combustion engine (10) according to claim 1, wherein the piston (14) comprises a projection (14A) extending along the axis (Y1) toward a crankshaft (16), the piston (14) being mechanically coupled to the crankshaft (16) via a connecting rod (18), the projection (14A) being configured to block fluid communication between the exhaust through hole (60B) and an inner volume (61) of the movable jacket (60) depending on the relative position of the piston (14) relative to the movable jacket (60).

3. The hydrogen internal combustion engine (10) according to claim 1 or 2, wherein, considered along the axis (Y1), the intake port (32) is closer to the cylinder head (56) than the exhaust port (34).

4. The hydrogen internal combustion engine (10) according to any one of claims 1 to 3, wherein, considered along the axis (Y1), the intake through hole (60A) is closer to the cylinder head (54) than the exhaust through hole (60B).

5. The hydrogen internal combustion engine (10) according to any one of claims 1 to 4, wherein, considered along the axis (Y1), the length (LI) between the intake port (32) and the exhaust port (34) is smaller than the length (L2) between the intake through hole (60A) and the exhaust through hole (60B).

6. The hydrogen internal combustion engine (10) according to any one of claims 1 to 5, comprising an active vacuum system (40) configured to depressurize the chamber (12A) via a vacuum port (36), the vacuum port (36) being arranged in a wall of the cylinder head (54).

7. The hydrogen internal combustion engine (10) according to claim 6, wherein the active vacuum system (40) comprises a vacuum producer (42) and a valve (44) configured to fluidly connect/disconnect the vacuum producer (42) and the chamber (12A).

8. The hydrogen internal combustion engine (10) according to any one of claims 1 to 7, configured so that a compression ratio during a compression stroke (CompS) is lower than a depressurization ratio during a combustion stroke (CombS), for example the compression ratio lies between 8 and 13, for example between 10.5 and 11.5, and the depressurization ratio lies between 14 and 18.

9. The hydrogen internal combustion engine (10) according to any one of claims 1 to 8, wherein a length (CompL) of a piston stroke during a compression stroke (CompS), called compression length, is shorter than a length (CombL) of a piston stroke during a combustion stroke (CombS), called combustion length.

10. The hydrogen internal combustion engine (10) according to any one of claims 1 to 10, wherein during a combustion cycle, the piston (14) is configured to move from a first top dead center (TDC1) to a first bottom dead center (BDC1), then from the first bottom dead center (BDC1) to a second top dead center (TDC2), then from the second top dead center (TDC2) to a second bottom dead center (BDC2), and then from the second bottom dead center (BDC2) to the first top dead center (TDC1), the first bottom dead center (BDC1), the second bottom dead center (BDC2), the second top dead center (TDC2) and the first top dead center (TDC1) being arranged in that order along the axis (Y1), the first top dead center (TDC1) being the dead center the closest to the cylinder head (54).

11. The hydrogen internal combustion engine (10) according to claim 10, wherein the length of the stroke of the piston (14) during a combustion stroke (CombS) is at least equal to the length between the first top dead center (TDC1) and the second bottom dead center (BDC2) and the length of the stroke of the piston (14) during a compression stroke (CompS) is equal to the length between an intermediate position (IP) and the first top dead center (TDC1), the intermediate position (IP) being disposed between the second bottom dead center (BDC2) and the second top dead center (TDC2) and distinct from the second bottom dead center (BDC2) and the second top dead center (TDC2).

12. The hydrogen internal combustion engine (10) according to any one of claims 1 to 11, wherein the piston (14) is mechanically connected to a crankshaft (16) via a connecting rod (18), the crankshaft (16) being solid with a planetary gear (20A) of an epicyclic gear train (80A), an output shaft (28A1) of the epicyclic gear train (80A) forming the driving shaft of the hydrogen internal combustion engine (10).

13. The hydrogen internal combustion engine (10) according to any of claims 1 to 12, wherein the hydrogen internal combustion engine (10) is a five-stroke engine, the five strokes being namely an intake stroke (IS), a compression stroke (CompS), a combustion stroke (CombS), an exhaust stroke (ES) and a depressurization stroke (DS) per combustion cycle, an active vacuum system (40) being configured to depressurize the chamber (12A) during the depressurization stroke (DS).

14. The hydrogen internal combustion engine (10) according to any one of claims 1 to 13, comprising an even number of cylinders (12), for example five or a multiple of five cylinders (12), wherein each cylinder (12) is provided with a single piston (14), each piston (14) being mechanically coupled to a single and same crank pin (17) of the crankshaft (16) via respective connecting rods (18).

15. The hydrogen internal combustion engine (10) according to any one of claims 1 to 14, the hydrogen internal combustion engine (10) being a spark-ignition engine.
